(19) Europäisches Patentamt
European Patent Office
Office européen des brevets

(11) **EP 2 933 546 A1**

(12) **EUROPEAN PATENT APPLICATION**

(43) Date of publication:
**21.10.2015 Bulletin 2015/43**

(51) Int Cl.:
*F16T 1/22* (2006.01)    *F16T 1/34* (2006.01)

(21) Application number: **15152046.7**

(22) Date of filing: **22.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.01.2014 JP 2014011192**

(71) Applicant: **Janis White Co., Ltd.
Osaka Fu (JP)**

(72) Inventors:
• **Fukai, Akira
Osaka Fu (JP)**
• **Gempei, Hiroki
Shizuoka (JP)**

(74) Representative: **Lang, Christian
LangPatent
Anwaltskanzlei IP Law Firm
Rosenheimer Strasse 139
81671 München (DE)**

(54) **Condensate drain device**

(57)    The present invention is to provide a condensate drain device comprising: a drawing pipe connected to the steam main pipe for drawing condensate within the steam main pipe; a condensate accumulation pipe connected to the drawing pipe and having a built-in filter; a draining pipe provided on a bottom cover of the condensate accumulation pipe and having a valve; a discharge pipe provided on the side surface of the condensate accumulation pipe; a steam generating nozzle be replaceable disposed on the mounting hole of the discharge pipe and having a axial bore with a length of 20-40mm and with a diameter of 0.2-18mm. The condensate is drained to the outside after it is transformed into steam at the steam generating nozzle.

Fig.1

**Description**

**BACKGROUND OF INVENTION**

**Field of the Invention**

The present invention relates to a condensate drain device, more particularly to a condensate drain device by which the condensate within a steam pipe can be drained automatically so as to refrain the steam from escaping out.

**Brief Description of the Prior Art**

A condensate drain device is to remove the condensate produced within a steam pipe. When temperature of steam is increased or pressure is applied to the steam, a fraction of steam will become condensate. If the condensate within the steam pipe is not drained out, this will result in loss of original space occupied by steam, temperature decrease and obstruction of the steam pipe. Therefore, the condensate drain device is an indispensable item in steam pipe.
There are many types of device for draining the condensate within steam pipe. A mechanical type condensate drain device is to detect whether water is present within a steam pipe so as to open or close a valve for draining. However, it often happens that foreign matters are caught in the valve when closing and may cause steam to escape. Moreover, when no condensate is detected and the valve is to be closed, a part of steam will escape away due to blocking of valve opening by foreign matters. Therefore, as there are many movable elements in the mechanical type condensate drain device, and the condition of losing steam occur frequently.
A condensate drain device using orifice has also been proposed in the prior art which is Japanese Utility Model No. 6-28496. The condensate drain device is formed with an orifice bore near the center of the pipe. A filter is built in the right hand side of the incoming pipe of condensate, and an expansion gap portion is provided at the left hand side of the delivery pipe of steam. As this condensate drain device has no movable elements, there are no same trouble happened as in the above mechanical type condensate drain device. However, as the length of the orifice bore is short, it is evitable to make the diameter of the orifice bore extremely small in order to accelerate the speed of the condensate and to lower down the pressure. Furthermore, as the length of the orifice bore is short and steam is not sufficiently generated and the resistance of the flow passage is small, the steam is unable to be suppressed effectively. For example, when the temperature of steam becomes 300°C so as to allow the condensate becoming steam, the volume will expand to even about 2600 times the original volume. Even the temperature of the steam is made to be 100°C, the volume is expand to be about 1700 times. Generally, the plate thickness of orifice is from 3mm to 10mm, this is too short to be the length of the axial bore for an orifice serving as a steam trap. Therefore, a multistage orifice is used to increase resistance in the related prior art.

**Summary of the invention**

The main object of the present invention is to provide a condensate drain device which the drain capacity is large and the steam leakage is small.
The above object of the present invention is achieved by the condensate drain device of the present invention, characterized in that the condensate drain device comprises: a drawing pipe connected to the steam main pipe for drawing condensate within the steam main pipe; a condensate accumulation pipe connected to the lower side of the drawing pipe and having a built-in filter; a draining pipe provided on a bottom cover of the condensate accumulation pipe and having a valve for opening / closing; a discharge pipe provided on the side surface of the condensate accumulation pipe; a steam generating nozzle be replaceable disposed on the mounting hole of the discharge pipe and having a axial bore with a length of 20-40mm and with a diameter of 0.2-18mm; the condensate is drained to the outside after it is transformed into steam at the steam generating nozzle.
As for the steam generating nozzle, the diameter of the axial bore is made to be gradually expanded from the inlet side toward the outlet side thereof.
The steam generating nozzle has a steam discharge quantity regulating cap, which has a plurality of steam discharge perforations and a plug for blocking the outlet of the axial bore, fixed at the outlet side by thread engagement. By rotating the steam discharge quantity regulating cap, the steam quantity discharged from the steam discharge perforations can be regulated by the gap between the plug and the outlet of the axial bore.
According to another embodiment of the present invention, a condensate drain device is provided, characterized in that the condensate drain device comprises: a drawing pipe connected to the steam main pipe for drawing condensate within the steam main pipe; a condensate accumulation pipe connected to the lower side of the drawing pipe and having a built-in filter; a draining pipe provided on a bottom cover of the condensate accumulation pipe and having a valve for opening/closing; a discharge pipe provided on the side surface of the condensate accumulation pipe; a water level regulating means in which a float moves upward as the water level of the condensate accumulation pipe becomes high and a sinker is thus separated from the drain port, and the float moves downward as the water level becomes low and thus the sinker blocks the drain port; a steam generating nozzle replaceably disposed on the mounting hole of the discharge pipe and having a axial bore with a length of 20-40mm and with a diameter of 0.2-18mm; the condensate is drained to the outside after it is transformed into steam at the steam generating nozzle.

According to the condensate drain device of the present invention, it has several benefit as following:

(a) As the axial bore of the steam generating nozzle is as long as 20-40mm and the bore diameter is 0.2-18mm, the flow speed of the condensate is accelerated and the pressure is lowered down so that the condensate can be transformed into steam. Since the condensate becomes steam in the axial bore, it forms a resistance accordingly so that the passage of steam can be suppressed. That is to say, as the condensate is transformed to steam, the steam becomes more difficult to pass through. For example, even in the case of no condensate except steam, the volume is 1/2600 if steam becomes water, so that the discharge quantity is not that large.

(b) As the condensate is accumulated in the condensate accumulating pipe, even the generating quantity of the condensate fluctuates according to seasons, a certain quantity of condensate can still be accumulated in the condensate accumulating pipe.

(c) As the discharge pipe is provided at the side surface of the condensate accumulating pipe, a certain quantity of condensate can be remained in the bottom of the condensate accumulating pipe.

(d) The filter for catching red rust is easily to be replaced by removing the bottom cover.

(e) When the valve for opening/closing of the water draining pipe is opened, the condensate accumulated in the interior of the condensate accumulating pipe can be discharged to the outside.

(f) As the steam generating nozzle is replaceably disposed on the mounting hole, steam generating nozzle with large axial bore diameter can be used in the case of low pressure in the steam main pipe, while steam generating nozzle with small axial bore diameter can be used in the case of high pressure in the steam main pipe.

As the diameter of the axial bore for the steam generating nozzle is made to be gradually expanded from the inlet side toward the outlet side thereof, the steam can be introduced effectively to the outlet side. Comparing with the case having the steam generating nozzle gradually narrowed, the dust contained in the condensate is more difficult to be accumulated within the axial bore.

As the steam discharge quantity regulating cap having a plurality of steam discharge perforations and a plug for blocking the outlet of the axial bore is fixed by threads engagement at the outlet side of the steam generating nozzle, the gap between the plug and the outlet of the axial bore can be regulated by rotating the steam discharge quantity regulating cap. In this manner, it is easy to cope with the steam quantity fluctuation happened in summer and winter seasons by using only one steam generating nozzle.

According to another embodiment of the condensate drain device of the present invention, same effect as above (a) - (f) can be obtained. Additionally, as the water level regulating means formed by a float, a sinker and a drain outlet is provided, even the water level in the condensate accumulating pipe moves upward above a pre-contemplated level, the water level is unable to move upward above a certain level.

**Brief Description of accompanying drawings**

Figure 1 is an explanatory drawing showing the structure of the condensate drain device according to the present invention.
Figure 2 is a perspective view of the steam generating nozzle (embodiment I).
Figure 3 is a sectional view of the steam generating nozzle (example I of axial bore).
Figure 4 is a sectional view of the steam generating nozzle (example II of axial bore).
Figure 5 is a front view of the steam generating nozzle (embodiment II).
Figure 6 is a sectional view of the steam generating nozzle of Figure 5.
Figure 7 is a side view of the right hand side of the steam generating nozzle of Figure 5.
Figure 8 is an explanatory drawing for the steam generating nozzle of Figure 5. (A) means the case in which the outlet of the axial bore is blocked by the plug of the steam discharge quantity regulating cap. (B) means the case in which the plug of the steam discharge quantity regulating cap is released so that the outlet of the axial bore is slightly opened. (C) means the case in which the plug of the steam discharge quantity regulating cap is further released so that the outlet of the axial bore is fully opened.

## DETAILED DESCRIPTION OF PREFERRED EMBODIMENTS

The condensate drain device of the present invention will be described in detail in conjunction with the accompanying drawings as below.

[Embodiment]

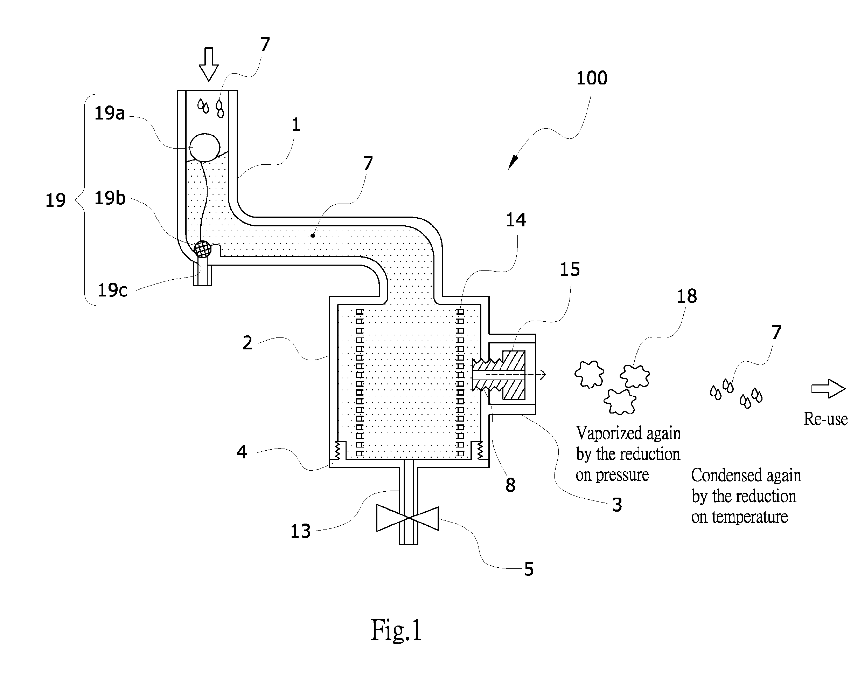

Figure 1 is an explanatory drawing showing the structure of the condensate drain device 100 according to the present invention. The condensate drain device 100 comprises: a drawing pipe 1 connected to the steam main pipe (not shown in the figure) for drawing condensate within the steam main pipe; a condensate accumulation pipe 2 connected to the lower side of the drawing pipe 1 and having a built-in filter 14; a draining pipe 13 provided on a bottom cover 4 of the condensate accumulation pipe 2 and having a valve 5 for opening/closing; a discharge pipe 3 provided on the side surface of the condensate accumulation pipe 2; a water level regulating means 19 in which a float 19a moves upward as the water level of the condensate accumulation pipe 2 becomes high and a sinker 19b is thus separated from the drain port 19c, and the float 19a moves downward as the water level becomes low and thus the sinker 19b blocks the drain port 19c; a steam generating nozzle 15 be replaceable disposed on the mounting hole 8 of the discharge pipe 3 and having a axial bore 16 with a length of 20-40mm and with a diameter of 0.2-18mm.

In order to replace a filter 14, the valve 5 for opening/closing is opened in non-operation state, and the water in the interior of the condensate accumulating pipe 2 is drained out through the draining pipe 13, then the bottom cover 4 is opened to take the old filter 14 out and a new filter 14 is replaced. Figure 1 shows the case that the condensate 7 moves upward to the drawing pipe 1. In case the condensate 7 is drained out smoothly from the steam generating nozzle 15, the water level is lowered down to the extent that the bottom portion of the discharge pipe 3 is still immersed in the water. In this state, if the balance can be reached, the steam and the condensate are alternately or mixed up together to surge into the axial bore 16 of the steam generating nozzle 15.

As shown in Figure 1, as the axial bore 16 of the steam generating nozzle 15 is as long as 20-40mm (It is 2-4 times the length of ordinary orifice), the flow speed of the condensate 7 is accelerated and the pressure thereof is thus reduced so that the condensate 7 is transformed to steam, when passing through the steam generating nozzle 15. The transformation from liquid to gas such as steam 18 will result in the increase of volume and thus the increase of resistance. The temperature of the steam 18 is lowered down so as to be transformed into condensate 7 again which then returns back to the water storage tank of boiler and is reused.

Steam is more viscous than condensate. Therefore, steam is not easy to pass through small hole, and condensate on the contrary is easy to pass through small hole. In case that the orifice bore is served as the steam trap (automatic valve), a small orifice is used. However in the present embodiment, since the condensate is transformed into steam in the axial bore and the resistance of the steam is to be employed, so the bore diameter of the axial bore can be made to be large. This only can make the discharge quantity of the condensate to become large.

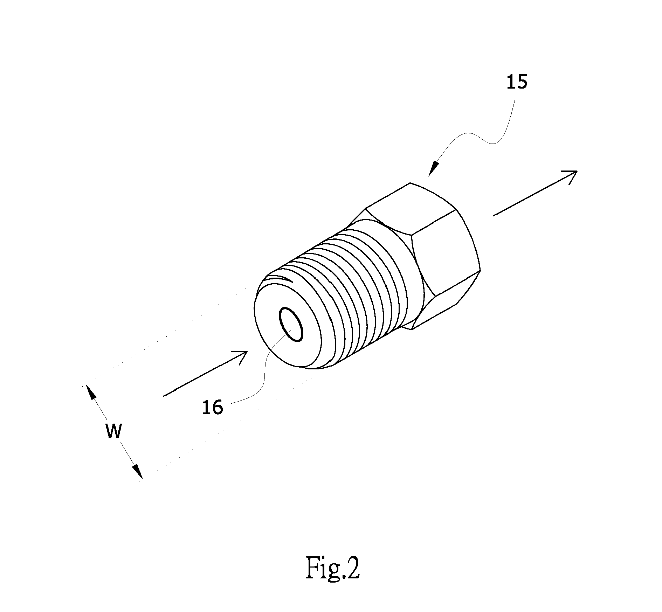

Figure 2 is a perspective view of the steam generating nozzle 15 of the embodiment I. The steam generating nozzle 15 is machined on its outside circumference to have thread portion provided thereon, and is replaceably fixed on the mounting hole 8 of the discharge pipe 3. The outside diameter W of the thread portion is made to be 24mm which conforms to the diameter of the mounting hole 8.

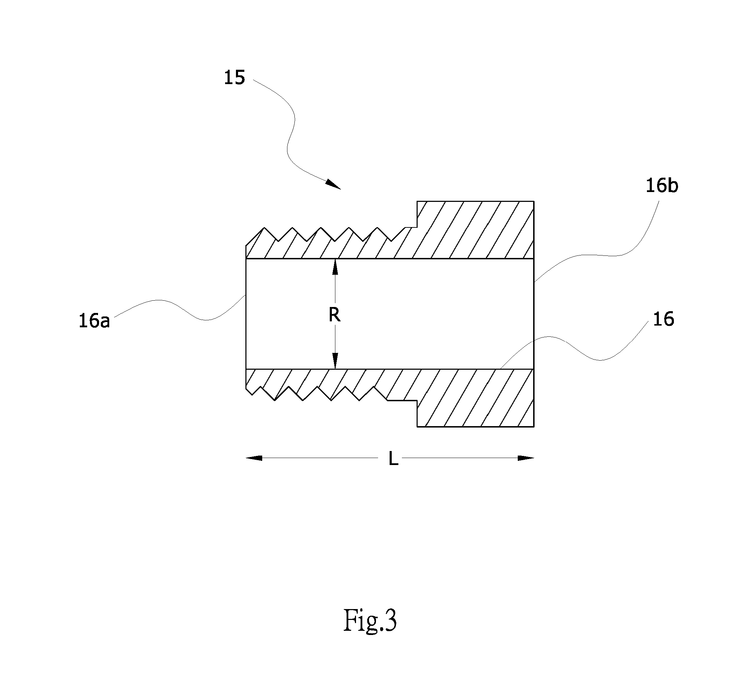

Figure 3 is a sectional view of the steam generating nozzle 15. The axial bore 16 in Figure 3 is a straight type from the inlet 16a toward the outlet 16b and the inner diameter R of the axial bore is 16mm. The bore diameter can be made to be 0.2-18mm. The bore diameter of ordinary orifice is small. The outside diameter of the thread portion is 24mm. The length L is made to be 37mm which is sufficiently long in contrast with sheet thickness 3-10mm of the orifice bore. However, the length L is not limited to this and it can be made to be 20-40mm. The steam generating nozzle 15 with such a big bore diameter can be used in the case of low pressure of steam main pipe (slightly higher than the atmosphere pressure).

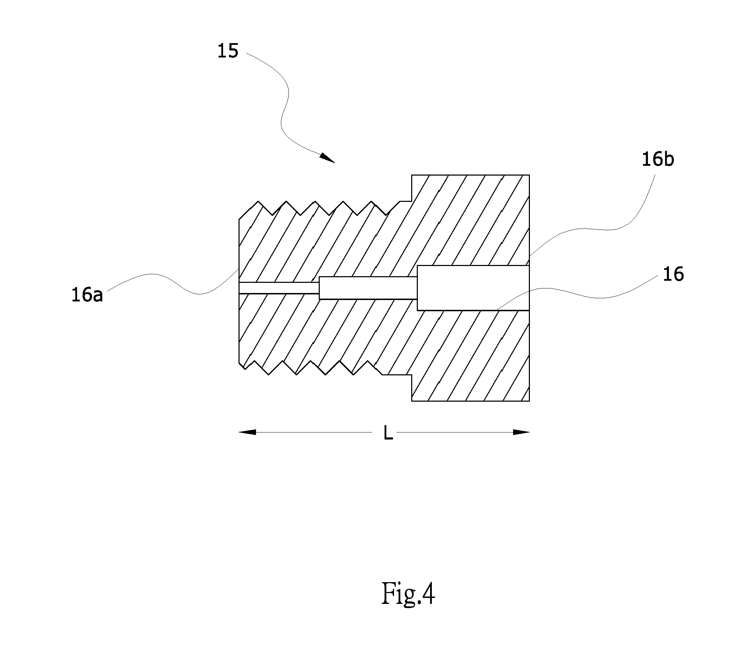

Figure 4 is a sectional view of the steam generating nozzle 15. The axial bore 16 in Figure 4 is a lap type from the inlet 16a toward the outlet 16b and the bore diameter of the axial bore is gradually expanded in 3 steps from the inlet side toward the outlet side. The outside diameter W of the thread portion is made to be 24mm which conforms to the diameter of the mounting hole 8. The length L is made to be 37mm. The steam generating nozzle 15 of Figure 4 can be used in the case of high pressure in steam main pipe. As the bore diameter is gradually expanded from the inlet side toward the outlet side, the dust contained in the condensate is difficult to accumulate within the axial bore 16. Although steam generating quantity of condensate fluctuates in summer and winter seasons, as the outside diameter W of the steam generating nozzle 15 conforms to the mounding hole 8, it is easy to cope with the condensate quantity fluctuation by just replacing the steam generating nozzle 15 of the discharge pipe 3.

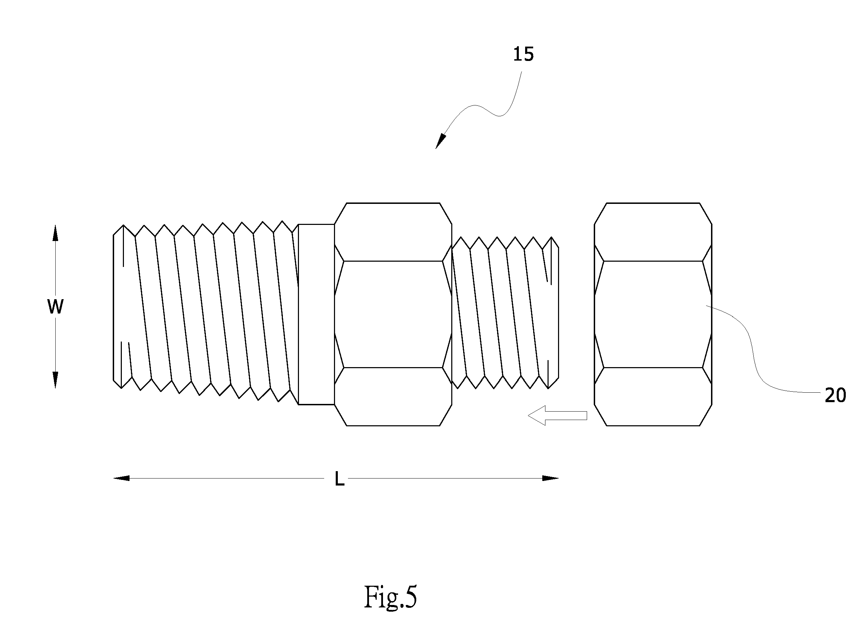

Figure 5 is a front view of the steam generating nozzle 15 of the embodiment II. The steam generating nozzle 15, having its outside of the inlet side machined with a thread portion thereon, is replaceably disposed on the mounting hole 8 of the discharge pipe 3. The outside diameter W of the thread portion is 24mm which is consistent to the diameter of the mounting hole 8. There is also a thread portion machined at its outside at the outlet side and the steam generating nozzle 15 is fixed here by thread engagement. The length L can be made to be 20-40mm, and is 38mm in this example.

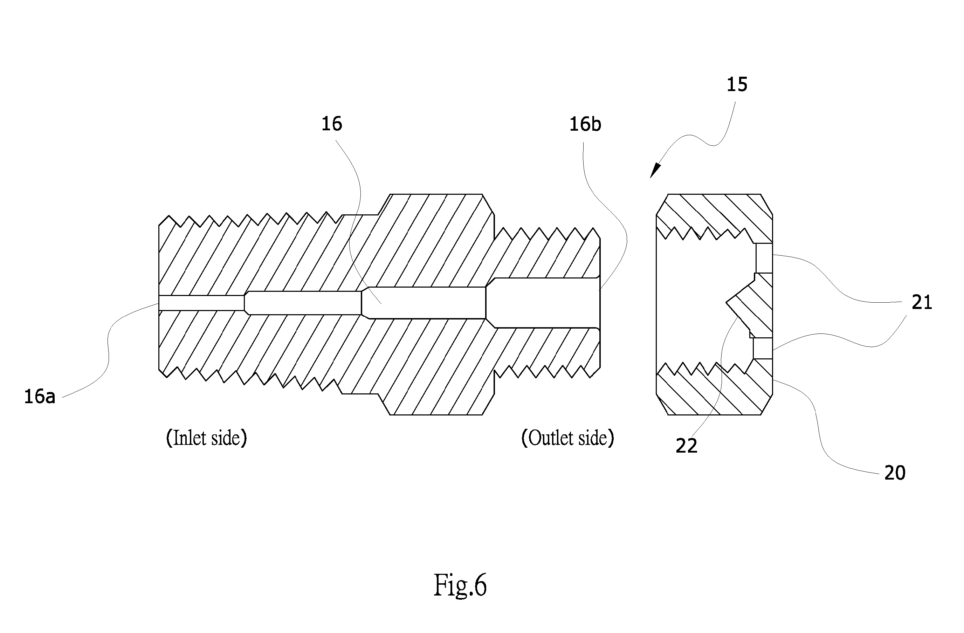

Figure 6 is a sectional view of the steam generating nozzle 15 of Figure 5. The steam discharge quantity regulating cap 20 comprises a plurality of steam discharge perforations 21 and a plug 22 for blocking the outlet 16b of the axial bore 16. By rotating the steam discharge quantity regulating cap 20, the outlet 16b of the axial bore 16 can be opened or closed to enable the adjustment of the gap by the plug 22. The steam coming out from the outlet 16b of the axial bore 16 is discharged out from the steam discharge perforations 21. The axial bore 16 is gradually expanded in 4 steps from the inlet side toward the outlet side. However, the bore diameter of the axial bore 16 is not limited to this, and can be made to be 0.7mm, 1.0mm, 2.0mm or 2.5mm.

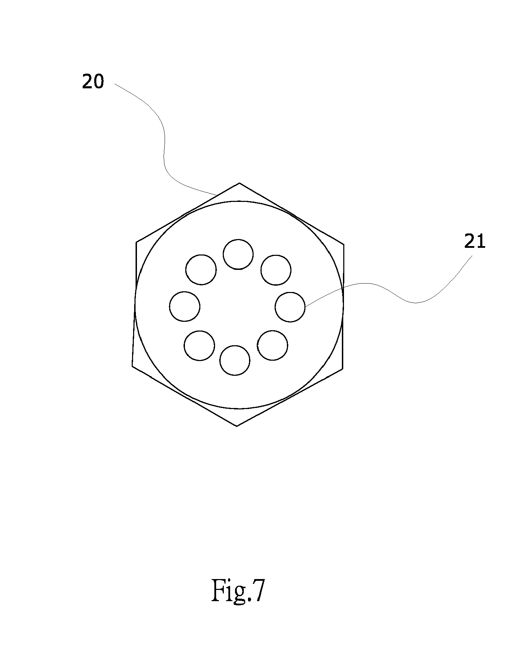

Figure 7 is a side view of the right hand side of the steam generating nozzle 15 of Figure 5. There are 8 steam discharge perforations 21 provided on the steam discharge quantity regulating cap 20. The total sectional area of these 8 steam discharge perforations 21 is either equal to or larger than the sectional area of the outlet 16b of the axial bore 16.

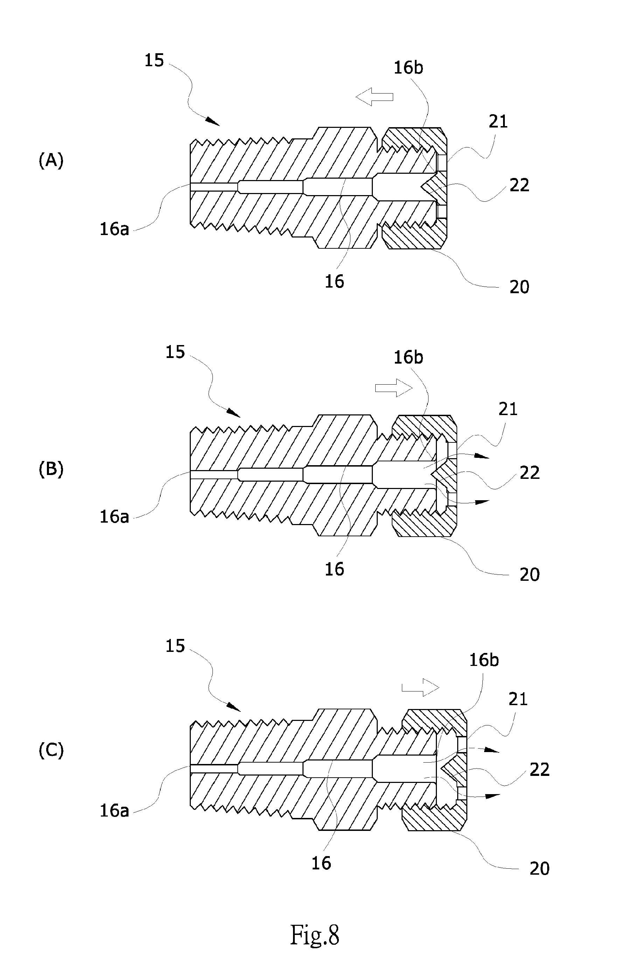

Figure 8 is an explanatory drawing for the steam generating nozzle 15 of Figure 5. (A) is the case in which the outlet 16b of the axial bore 16 is blocked by the plug 22 of the steam discharge quantity regulating cap 20. (B) is the case in which the plug 22 of the steam discharge quantity regulating cap 20 is released so that the outlet 16b of the axial bore 16 is slightly opened. (C) is the case in which the plug 22 of the steam discharge quantity regulating cap 20 is further released so that the outlet 16b of the axial bore 16 is fully opened. In this manner, when the steam discharge quantity regulating cap 20 is rotated to be released, the steam coming out from the outlet 16b of the axial bore 16 is discharged out from the steam discharge perforations 21. Configuring like this, the steam quantity discharged from the steam discharge perforations 21 can be regulated by the adjustment of the gap between the plug 22 and the outlet 16b of the axial bore 16. In this way, it is easy to cope with the fluctuation of condensate in summer and winter seasons without replacement of another steam generating nozzle 15.

The bore diameter of the steam generating nozzle 15 can be calculated from the formula as shown in mathematic formula 1.

[mathematic formula 1]

$$Q = C \pi D 2 / \sqrt{} (2 g P / \gamma)$$

Q : flow rate of condensate
C : compensation coefficient
D : diameter of axial bore 16
g : gravitational acceleration
P : pressure
$\gamma$ : density of condensate

**Availability of the invention**

The present invention is provided with an axial bore in the steam generating nozzle, the condensate is transformed into steam on draining so that this can be used as a resistance to the leakage of steam. Therefore, it is especially suitable to serve as a condensate drain device.

**Claims**

**1.** A condensate drain device, comprises:

a drawing pipe connected to the steam main pipe for drawing the condensate within said steam main pipe;
a condensate accumulation pipe connected to the lower side of said drawing pipe, and said condensate accumulation pipe having a built-in filter;

a draining pipe provided on a bottom cover of said condensate accumulation pipe and said draining pipe having a valve for opening/closing;

a discharge pipe provided on the side surface of said condensate accumulation pipe;

a steam generating nozzle be replaceable disposed on the mounting hole of said discharge pipe and having a axial bore with a length of 20-40mm and with a diameter of 0.2-18mm; and

said condensate is drained to the outside after it is transformed into steam at said steam generating nozzle.

2. The condensate drain device as claimed in claim 1, wherein the diameter of said axial bore of said steam generating nozzle is made to be gradually expanded from the inlet side toward the outlet side thereof.

3. The condensate drain device as claimed in claim 1, wherein said steam generating nozzle has a steam discharge quantity regulating cap, having a plurality of steam discharge perforations and a plug for blocking the outlet of said axial bore, fixed at the outlet side by thread engagement; by rotating said steam discharge quantity regulating cap, the steam quantity discharged from said steam discharge perforation is regulated by the gap between said plug and the outlet of said axial bore.

4. A condensate drain device, comprises:

a drawing pipe connected to the steam main pipe for drawing the condensate within said steam main pipe;

a condensate accumulation pipe connected to the lower side of said drawing pipe, and said condensate accumulation pipe having a built-in filter;

a draining pipe provided on a bottom cover of said condensate accumulation pipe and having a valve for opening/closing;

a discharge pipe provided on the side surface of said condensate accumulation pipe;

a water level regulating means in which a float moves upward as the water level of said condensate accumulation pipe becomes high and a sinker is thus separated from the drain port, and the float moves downward as the water level becomes low and thus the sinker blocks the drain port;

a steam generating nozzle be replaceable disposed on the mounting hole of said discharge pipe and having a axial bore with a length of 20-40mm and with a diameter of 0.2-18mm; and

said condensate is drained to the outside after it is transformed into steam at said steam generating nozzle.

7

19 { 19a, 19b, 19c

7

100

1

7

14

15

18

7

2

8

3

Vaporized again
by the reduction
on pressure

Condensed again
by the reduction
on temperature

Re-use

4

13

5

Fig.1

Fig.2

Fig.3

16b

16

15

16a

L

Fig.4

Fig.5

Fig.6

EP 2 933 546 A1

Fig.7

Fig.8

Europäisches
Patentamt

European
Patent Office

Office européen
des brevets

# EUROPEAN SEARCH REPORT

Application Number

EP 15 15 2046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/193047 A1 (GOODING HAROLD S [US]) 5 August 2010 (2010-08-05) * paragraphs [0041] - [0047]; figures 1-6 * | 1-4 | INV. F16T1/22 F16T1/34 |
| A | GB 118 791 A (BRUSCHE JOHANNES STEPHANUS) 12 September 1918 (1918-09-12) * the whole document * | 1-4 | |
| A | FR 2 432 674 A3 (DOUGLAS ITALIA SPA) 29 February 1980 (1980-02-29) * the whole document * | 1-4 | |
| A | CN 202 188 292 U (TIANJIN GANGYI ENERGY SAVING TECHNOLOGY DEV CO LTD) 11 April 2012 (2012-04-11) * the whole document * | 1-4 | |
| A | US 5 088 518 A (STAMATAKIS E M [US] ET AL) 18 February 1992 (1992-02-18) * the whole document * | 1-4 | |

TECHNICAL FIELDS
SEARCHED (IPC)

F16T

The present search report has been drawn up for all claims

| Place of search | Date of completion of the search | Examiner |
|---|---|---|
| Munich | 10 September 2015 | Röberg, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 15 15 2046

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2015

| Patent document cited in search report | | Publication date | Patent family member(s) | | Publication date |
|---|---|---|---|---|---|
| US 2010193047 | A1 | 05-08-2010 | US 2010193047 A1 | | 05-08-2010 |
| | | | WO 2008108967 A2 | | 12-09-2008 |
| GB 118791 | A | 12-09-1918 | NONE | | |
| FR 2432674 | A3 | 29-02-1980 | NONE | | |
| CN 202188292 | U | 11-04-2012 | NONE | | |
| US 5088518 | A | 18-02-1992 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 6028496 A